(19) Europäisches Patentamt
European Patent Office
Office européen des brevets

(11) **EP 2 570 963 A2**

(12) **EUROPEAN PATENT APPLICATION**

(43) Date of publication:
**20.03.2013 Bulletin 2013/12**

(51) Int Cl.:
***G06K 9/00*** *(2006.01)*

(21) Application number: **12005298.0**

(22) Date of filing: **19.07.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.09.2011   JP 2011201660**

(71) Applicant: **Clarion Co., Ltd.**
**Saitama 330-0081 (JP)**

(72) Inventors:
• **Nakamura, Katsuyuki**
  **Tokyo 100-8220 (JP)**
• **Yoshinaga, Tomoaki**
  **Tokyo 100-8220 (JP)**
• **Morinaga, Mitsutoshi**
  **Tokyo 100-8220 (JP)**
• **Ogata, Takehito**
  **Tokyo 100-8220 (JP)**

(74) Representative: **Strehl Schübel-Hopf & Partner**
**Maximilianstrasse 54**
**80538 München (DE)**

(54) **Systems, devices, and methods for recognizing objects as perceived from a vehicle**

(57)     Preferably, an object such as a vehicle is detected regardless of a distance up to the object. A device for recognizing external worlds that analyzes an image acquired by capturing the vicinity of a self-vehicle includes: a processing area setting unit setting a first area of the image indicating a short range and a second area of the image indicating a long range, a first object detecting unit detecting the object by means of a first classifier in the set first area, a second object detecting unit detecting the object by considering even a background pattern by means of a second classifier in the set second area, a rectangular correction unit correcting a detected object rectangular shape and a time to collision (TTC) computing unit computing a prediction time up to a collision based on the detected object rectangular shape.

## FIG. 1A

**Description**

Background of the invention

The present invention relates to a technology that recognizes external worlds by using an image sensor, and particularly, to a technology that detects an object regardless of a distance up to the object.

Development of a preventive safety system that prevents an accident is under way in order to reduce casualties by a traffic accident. As the preventive safety system which is a system that is operated under a situation in which a possibility that the accident will occur is high, for example, a pre-crash safety system is put to practical use, which calls a driver's attention by a warning when a possibility that a self-vehicle collides with a vehicle which travels ahead of the self-vehicle arises and reduces damages of an occupant by using an automatic brake when the collision cannot be avoided.

As a method of detecting the vehicle ahead of in front of the self-vehicle, a method of imaging a front of the self-vehicle with a camera mounted on the vehicle and recognizing a shape pattern of the vehicle, that is, a vehicle pattern from the captured image has been known. For example, Japanese Patent Application Laid-Open Publication No. 2005-156199 discloses a method of detecting the vehicle by determining edges of both ends of the vehicle. However, since how the vehicle looks is different depending on the distance, high detection precision cannot be implemented only by applying the same processing regardless of a long range or a short range. For example, since resolution deteriorates in the long range, a characteristic having high discrimination cannot be determined, and as a result, detection precision deteriorates. In regards to the object, a method of changing a processed content depending on a distance or an access state is proposed (see Japanese Patent Application Laid-Open Publication Nos. 2007-072665 and H10(1998)-143799).

Brief summary of the invention

According to Japanese Patent Application Laid-Open Publication No. 2007-072665, an object candidate which becomes an obstacle to travelling is detected by a background subtraction method and a template defined for each distance is applied to the detected object candidate so as to discriminate what the object is. However, when the object is omitted from first object candidate detection, the object cannot be discriminated.

According to Japanese Patent Application Laid-Open Publication No. H10(1998)-143799, a template for tracking a vehicle is switched based on a relative velocity of the vehicle detected by a stereo camera so as to improve tracking performance. However, performance cannot be improved with respect to initial detection.

In view of above problems, the present invention has been made in an effort to provide a method and a device for recognizing external worlds that more preferably detect an object regardless of a distance, and a vehicle system using the same.

An embodiment of the present invention provides a method for recognizing external worlds by an external world recognizing device that analyzes a captured image and detects an object in which the external world recognizing device sets a first area and a second area for detecting the object in the image, and the object is detected by using both an object pattern and a background pattern of the corresponding object pattern at the time of detecting the object in the set second area.

Another embodiment of the present invention provides a device for recognizing external worlds that analyzes a captured image and detects an object, including: a processing area setting unit setting a first area and a second area for detecting the object in the image; and first and second object detecting units detecting the objects in the set first area and second area, respectively, wherein the first object detecting unit uses only an object pattern at the time of detecting the object and the second object detecting unit uses both the object pattern and a background pattern of the corresponding object pattern at the time of detecting the object.

Yet Another embodiment of the present invention provides a vehicle system including an external world recognizing device that detects a vehicle by analyzing an image acquired by capturing the vicinity of a self-vehicle, in which the external world recognizing device includes a processing unit and a storage unit, the storage unit stores a first classifier and a second classifier, and the processing unit sets a first area for detecting a vehicle and a second area of a longer range than the first area, in the image, detects a vehicle rectangular shape of the vehicle by determining a vehicle pattern by means of the first classifier, in the first area, detects the vehicle rectangular shape of the vehicle by determining the vehicle pattern and a background pattern of the corresponding vehicle pattern by means of the second classifier, in the second area, corrects the vehicle rectangular shape detected in the second area and computes a time to collision (TTC) up to a collision with the self-vehicle based on the vehicle rectangular shape detected by using the first classifier or the vehicle rectangular shape detected and corrected by using the second classifier.

According to the embodiments of the present invention, the object can be detected more appropriately regardless of the distance up to the object.

Brief description of the drawings

FIG. 1A is a diagram for describing detection of an object according to each embodiment;
FIG. 1B is a block diagram for describing a device for recognizing external worlds according to each embodiment;
FIG. 2 is a block diagram of a configuration example of a device for recognizing external worlds according to a first embodiment;
FIG. 3 is a description diagram of a processing area setting unit according to the first embodiment;
FIG. 4A is a description diagram of a first vehicle detecting unit according to the first embodiment;
FIG. 4B is a description diagram of a first classifier according to the first embodiment;
FIG. 5A is a description diagram of a second vehicle detecting unit according to the first embodiment;
FIG. 5B is a description diagram of a second classifier according to the first embodiment;
FIG. 5C is a description diagram of a rectangular correction unit according to the first embodiment;
FIG. 6 is a diagram illustrating a processing flowchart of the device for recognizing external worlds according to the first embodiment;
FIG. 7 is a block diagram of a device for recognizing external worlds according to a second embodiment;
FIG. 8A is a description diagram of a processing area setting unit according to the second embodiment;
FIG. 8B is a description diagram of the processing area setting unit according to the second embodiment;
FIG. 9 is another description diagram of the processing area setting unit according to the second embodiment and
FIG. 10 is a block diagram of a vehicle system according to a third embodiment.

Detailed description of the invention

Hereinafter, embodiments of the present invention will be described with reference to the accompanying drawings. In the following description, as an object to be detected, a vehicle, in particular, a vehicle that travels ahead of a self-vehicle is described as an example, but the object to be detected is not limited thereto and may be a pedestrian.

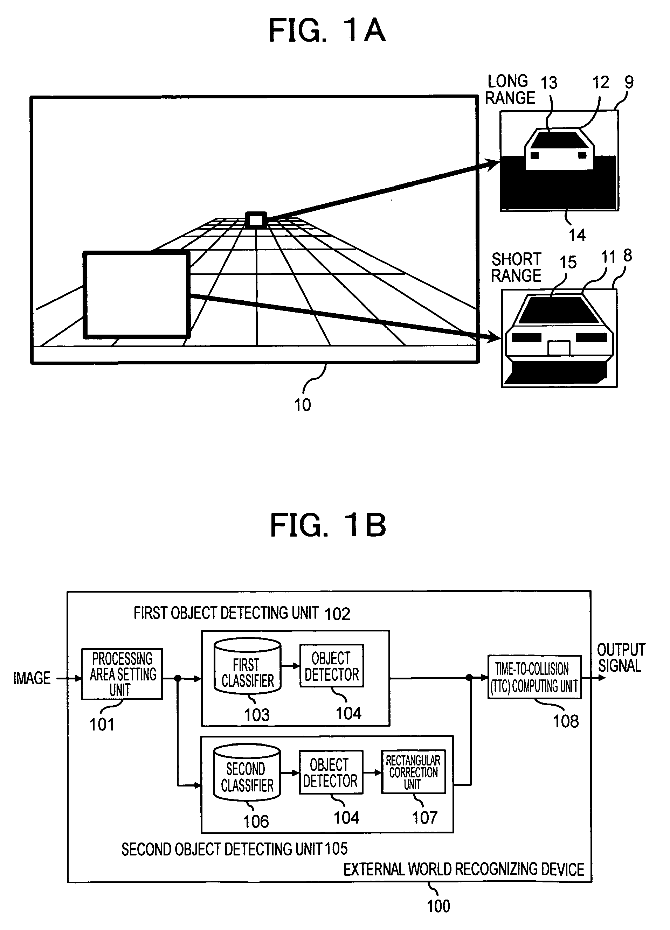

By using FIGS. 1A and 1B, a device for recognizing external worlds, which includes an object detecting module according to an embodiment of the present invention, will be described.

FIG. 1A is an example of a vehicle-front image 10 captured by a camera mounted on a vehicle. Reference numerals 8 and 9 in the vehicle-front image 10 represent processing areas where image processing of object detection is performed and are configured by a 2D image pattern. In the processing areas 8 and 9 of the vehicle-front image 10 of FIG. 1A, objects 11 and 12 to be detected represent vehicles and an object pattern of an object to be detected is a vehicle pattern illustrating a back-surface shape of the vehicle, that is, back-surface patterns 13 and 15 of the vehicle. As illustrated in the figure, in the vehicle-front image 10, a back-surface pattern 15 of the object 11 in a short range is clear and the back-surface pattern 13 of the object 12 in a long range is unclear. When a back-surface pattern of an object is unclear, it is difficult to extract a characteristic having high discrimination and the performance of the object detection deteriorates.

In FIG. 1A, reference number 14 of the processing area 9 represents a background pattern of the object 12 in the long range. In this specification, the background pattern means a pattern other than the back-surface pattern 13 which is the object pattern to be detected in the processing area for the object detection. Therefore, the back-surface pattern 14 represents an image pattern other than the back-surface pattern 13 of the object 12 in the processing area 9.

Accordingly, in the device for recognizing external worlds according to each embodiment, a plurality of classifiers are prepared for each distance and the plurality of classifiers are switched so as to improve the performance of the object detection in all distances. In detail, the object is detected by using the classifier based on the object pattern to be detected in the short range and the object is detected by using the classifier including both the object and the background pattern in the long range. The reason is as follows. That is, in the long range in which the object pattern is unclear, a method for increasing an amount of information other than the object may increase a detection rate by concurrently using the background pattern. In the short range in which the object pattern is clear, a method without the background pattern may decrease error detection. In the device for recognizing external worlds according to each embodiment, the classifiers having different characteristics are defined and the classifiers are switched appropriately according to the short range and the long range so as to more preferably detect the object regardless of the distance.

FIG. 1B is a diagram illustrating one example of a basic configuration of the device for recognizing external worlds according to each embodiment. A device 100 for recognizing external worlds illustrated in the figure includes a processing area setting unit 101 setting a processing area in the image, a first object detecting unit 102, a second object detecting unit 105, a time to collision (TTC) computing unit 108. The first object detecting unit 102 is constituted by a first classifier 103 and an object detector 104 and the second object detecting unit 105 is constituted by a second classifier 106, the object detector 104 and a rectangular correction unit 107.

In each embodiment described below, as the objects 11 and 12, 4-wheel vehicles that travel ahead are described as an example, but the objects are not limited thereto. For example, even a two-wheel vehicle and a pedestrian may be more preferably detected by the same module.

[First Embodiment]

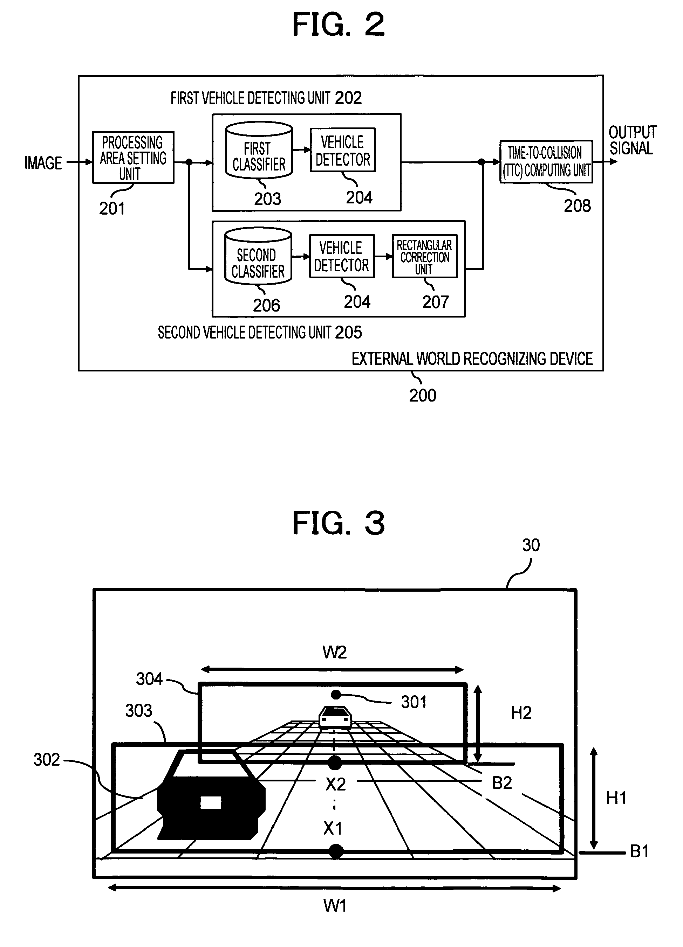

FIG. 2 is a block diagram illustrating one example of a device 200 for recognizing external worlds according to the first embodiment. The device 200 for recognizing external worlds illustrated in the figure includes a processing area setting unit 201, a first vehicle detecting unit 202, a second vehicle detecting unit 205 and a time to collision (TTC) computing unit 208. The first vehicle detecting unit 202 includes a first classifier 203 and a vehicle detector 204, and the second vehicle detecting unit 205 includes a second classifier 206, the vehicle detector 204 and a rectangular correction unit 207. Each component may be configured by hardware or software. Each component may be a module in which the hardware and the software are combined. When the device 200 for recognizing external worlds is implemented by the software, the device 200 for recognizing external worlds may be constituted by a central processing unit (CPU) as a processing unit, a memory as a storage unit, an input/output unit (I/O) and the like, of a general calculator, as described by exemplifying a vehicle system below.

Referring to FIG. 3, processing flows of the device 200 for recognizing external worlds and the processing area setting unit 201 will be described, in the embodiment. First, a virtual plane 302 is determined in an image 30 based on an offset point 301 and a camera parameter. A first area 303 indicating a short range area and a second area 304 indicating a long range area are set based on the determined virtual plane 302. For example, a bottom position B1 on the image is acquired by assuming that a start point of the short range area in the image 30 is an ND[m] point, and parameters X1, W1 and H1 indicating the position and the size of the area are prescribed to set the first area 303. Similarly, a bottom position B2 on the image is acquired by assuming that a start point of a long range area is an FD[m] point, and parameters X2, W2 and H2 indicating the position and the size of the area are prescribed to set the second area 304. The device 200 for recognizing external worlds of the embodiment performs vehicle detection to be described below for each processing area acquired as above.

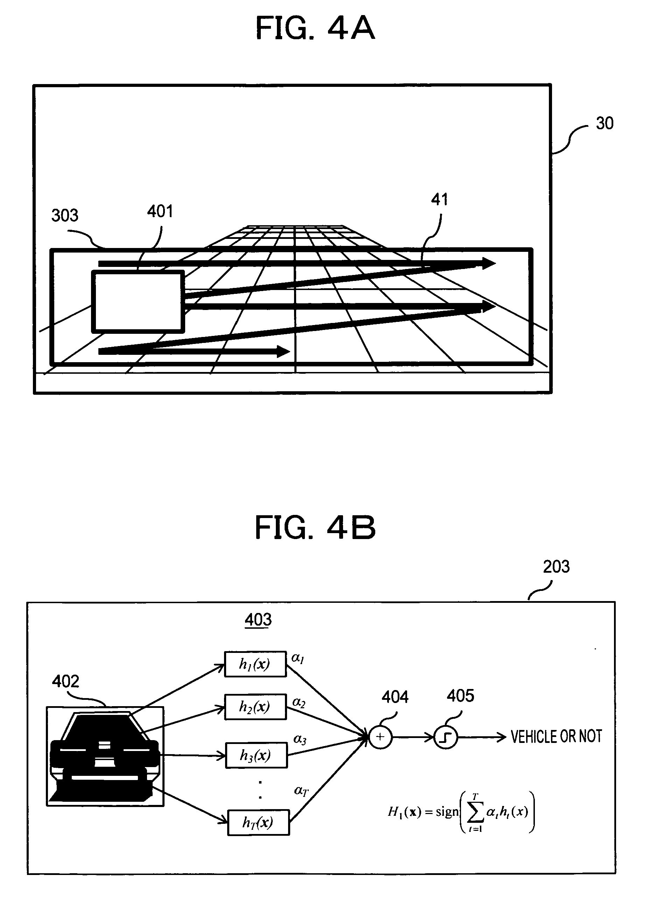

Referring to FIGS. 4A and 4B, a processing flow of the first vehicle detecting unit 202 of FIG. 2 according to the embodiment will be described.

As illustrated in FIG. 4A, the first vehicle detecting unit 202 performs vehicle detection in the short range area by performing raster scanning 41 of the inside of the first area 303 indicating the short range area while changing the position and the size of a scanning range 401 in the image 30. A scanning method is not limited to the raster scanning 41, but other scanning methods such as spiral scanning or thinned scanning depending on importance may be used.

FIG. 4B is a diagram for describing a function of the first classifier 203 in the first vehicle detecting unit 202 of FIG. 3. As illustrated in FIG. 4B, the first classifier 203 is applied to an image part area 402 indicated by the rectangular scanning range 401 to discriminate whether a scanning destination is the vehicle. The first classifier 203 is constituted by T weak classifiers 403 capturing a back-surface pattern of the vehicle as the shape of the vehicle, a summation unit 404 and a sign function 405. Discrimination processing of the first classifier 203 is represented as in Equation 1.

[Equation 1]

$$H_1(x) = \mathrm{sign}\left( \sum_{t=1}^{T} \alpha_{1t} h_{1t}(x) \right)$$

$$(1)$$

Herein, x represents the image part area 402, $H_1(x)$ represents the first classifier, $h_t(x)$ represents a weak classifier and $\alpha_t$ represents a weight coefficient of the weak classifier $h_t(x)$. That is, the first classifier 203 is configured by weighted voting of each of T weak classifiers. Sign () is the sign function, and when a value in parentheses on a right side is positive, +1 is returned and when the corresponding value is negative, -1 is returned. Weak classifier $h_t(x)$ in the parentheses on the right side may be represented as in Equation 2.

[Equation 2]

$$h_t(x) = \begin{cases} +1 & \text{if } f_t(x) > \theta_t \\ -1 & \text{otherwise} \end{cases}$$

(2)

Herein, $f_t(x)$ represents a t-th feature amount and $\theta$ represents a threshold. As the feature amount, Haar-like features (differences in luminance average among the areas) or histograms of oriented gradients (HoG) features may be used. Other feature amounts may be used or co-occurrence features in which different feature amounts are combined may be used. In selecting the feature amount or learning the weight coefficient, a learning method such as adaptive boosting (AdaBoost) or random forest may be used.

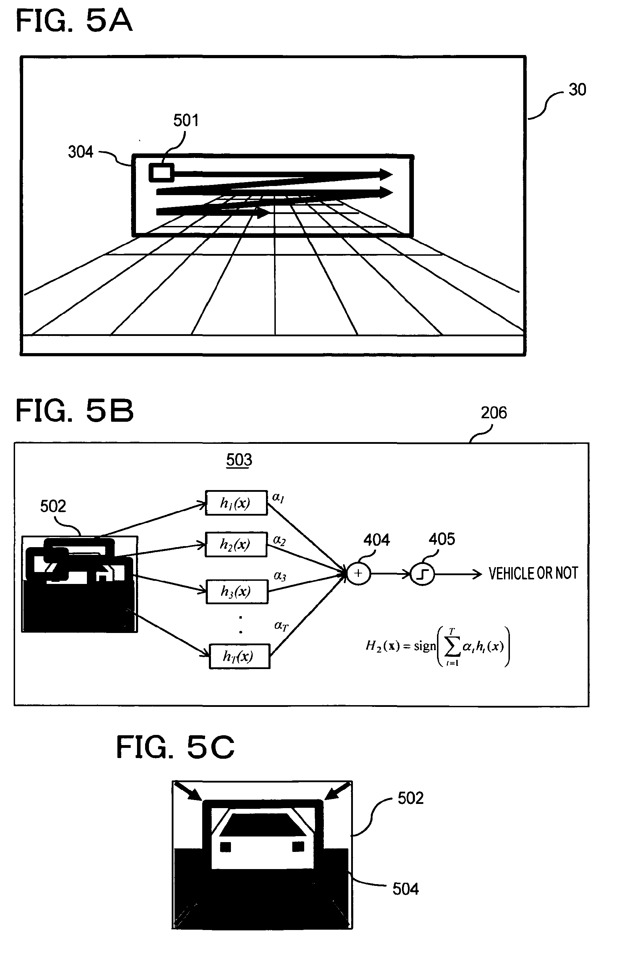

Next, referring to FIGS. 5A, 5B and 5C, a processing flow of the second vehicle detecting unit 205 according to the embodiment will be described. A basic flow of a discrimination function by the second classifier 205 is similar to that of the first vehicle detecting unit 202 illustrated in FIGS. 4A and 4B, and hereinafter, only a difference will be described.

As illustrated in FIG. 5A, the second vehicle detecting unit 205 performs vehicle detection by performing raster scanning of the inside of the second area 304 which is the long range area while changing the position and the size of a rectangular scanning range 501 in the image 30.

FIG. 5B is a diagram illustrating one example of an internal configuration of the second classifier 206 in the second vehicle detecting unit 205. In FIG. 5B, the second classifier 206 is applied to an image part area 502 indicated by the rectangular scanning range 501. Unlike the first classifier 203, the second classifier 206 detects both the vehicle pattern as the shape of the vehicle and the background pattern. In detail, the second classifier 206 includes a plurality of weak classifiers 503 that determine a vehicle pattern as the substantial shape of the vehicle on a road surface, and as a result, the vehicle may be accurately detected even in a long range having low resolution.

Referring to FIG. 5C, a processing content of the rectangular correction unit 207 in the second vehicle detecting unit 205 will be described. The rectangular correction unit 207 corrects a vehicle rectangular shape outputted by the vehicle detector 204, in the second vehicle detecting unit 205. In detail, the rectangular correction unit 207 corrects a vehicle rectangular shape 502 including the background pattern as a vehicle rectangular shape 504 without the background pattern, by using a background/vehicle rate which has been already known while learning. Since an accurate vehicle width is required in the time to collision (TTC) computing unit 208 to be described below, it is important to correct a vehicle width by the vehicle rectangular shape 504 acquired by the rectangular correction unit 207 in the device 200 for recognizing external worlds according to the embodiment.

The time to collision (TTC) computing unit 208 of FIG. 3 computes a time to collision by using the vehicle rectangular shape outputted by the first vehicle detecting unit 202 or the second vehicle detecting unit 205. First, a relative distance z from a self-vehicle is estimated based on the acquired vehicle rectangular shape. For example, the relative distance z is acquired as follows by using a focal length f, a vehicle width Wi on the image and a real vehicle width Wt.

[Equation 3]

$$z = f \frac{W_t}{W_i}$$

(3)

Alternatively, the relative distance z may be acquired as follows by using the focal length f, a vehicle height Hi on the image and a camera installation height Ht.

[Equation 4]

$$z = f \frac{H_\ell}{H_i}$$

(4)

The TTC may be acquired as in the following equation based on the relative distance z and a relative velocity vz (a derivation of z) which are acquired as above.

[Equation 5]

$$TTC = \frac{z}{vz}$$

(5)

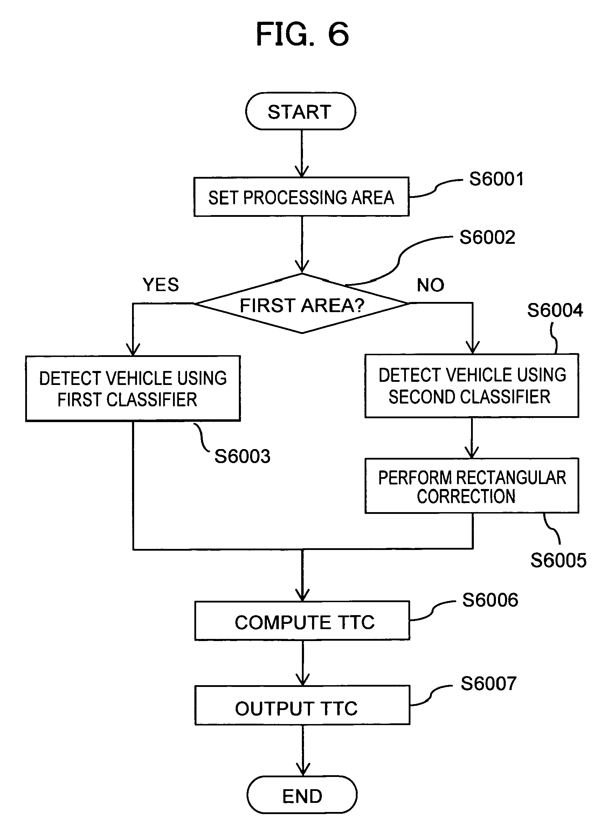

FIG. 6 is a diagram illustrating a processing flow of the device 200 for recognizing external worlds according to the embodiment. When the device 200 for recognizing external worlds is implemented by the software, a principal agent of the processing is a CPU which is a processing unit of the device 200 for recognizing external worlds described above.

In FIG. 6, first, a first area 303 and a second area 304 are set in an input image (S6001). Thereafter, it is judged whether the processing area is the first area 303 (S6002) and when the processing area is the first area, the vehicle is detected through the vehicle detector 204 by using the first classifier 203 (S6003). When the processing area is the second area, the vehicle is detected through the vehicle detector 204 by using the second classifier 206 (S6004). Since the vehicle detected in the second area includes the background pattern, rectangular correction is performed through the rectangular correction unit 207 by using a background/vehicle rate which has been already known (S6005). Lastly, the time to collision (TTC) is computed by using the time to collision (TTC) computing unit 208 (S6006) to output a computation result (S6007).

In the first embodiment described above, the following effects can be acquired by detecting the vehicle by switching the first classifier 203 and the second classifier 206. That is, in the short range area having high resolution, since an image pattern of the vehicle itself may be maximally exhibited, a high detection rate may be implemented while suppressing error detection. In the long range area having low resolution, the detection rate may be significantly improved by increasing the amount of information by means of both the vehicle and a pattern other than the vehicle. The area is limited and vehicle detection suitable for each area is performed to thereby reduce a processing load.

[Second Embodiment]

Next, a device for recognizing external worlds according to a second embodiment will be described. The same reference numerals designate the same components among components of the device for recognizing external worlds according to the second embodiment as the components of the device for recognizing external worlds according to the first embodiment, and a description thereof will be omitted.

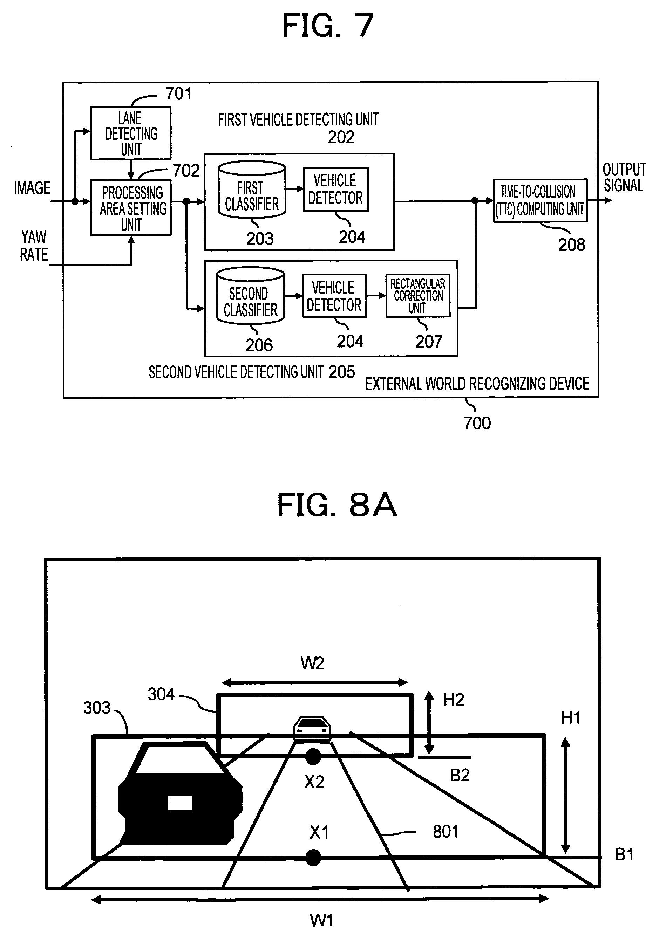

FIG. 7 is a block diagram illustrating one example of a device 700 for recognizing external worlds according to the second embodiment. The device 700 for recognizing external worlds illustrated in FIG. 7 includes a lane detecting unit 701, a processing area setting unit 702, the first vehicle detecting unit 202, the first classifier 203, the vehicle detector 204, the second vehicle detecting unit 205, the second classifier 206, the rectangular correction unit 207 and the time to collision (TTC) computing unit 208. The device 700 for recognizing external worlds, in particular, the lane detecting unit 701 and the processing area setting unit 702 may also be configured by hardware or software.

First, referring to FIG. 8A, processing flows of the lane detecting unit 701 and the processing area setting unit 702 of the embodiment will be described. The lane detecting unit 701 detects a lane 801 by using linearity of a white line or a yellow line on the road surface. The linearity may be judged by using, for example, Hough transform, but the linearity may be judged by using other methods. Thereafter, the first area 303 indicating the short range area and the second area 304 indicating the long range area are set based on the lane 801 outputted by the lane detecting unit 701.

A processing area setting method in the processing area setting unit 702 is the same as that in the first embodiment, and for example, the bottom position B1 on the image is acquired by assuming that the start point of the short range area is the ND[m] point, and parameters X1, W1 and H1 indicating the position and the size of the area are prescribed to set the first area 303. Similarly, the bottom position B2 on the image is acquired by assuming that the start point of the long range area is the FD[m] point, and parameters X2, W2 and H2 indicating the position and the size of the area are prescribed to set the second area 304. Of course, setting the points of the short range and the long range is not limited thereto. Vehicle detection is performed by using the vehicle detector 204 for each processing area as acquired above.

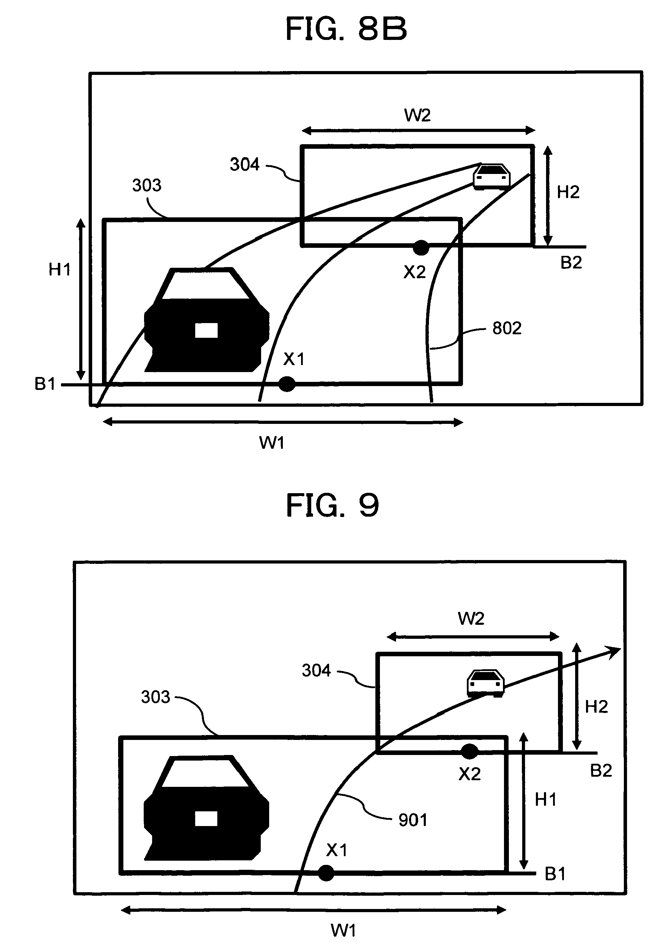

FIG. 8B illustrates the processing flows of the lane detecting unit 701 and the processing area setting unit 702 in a curve. In the case of the curve, the lane detecting unit 701 may detect a curved lane 802 by using generalized Hough transform. Of course, the lane may be detected while extending a straight line of the short range and the lane may be detected by using other methods.

FIG. 9 is an example of a processing flow of the processing area setting unit 702 using a yaw rate. A prediction course 901 of the self-vehicle may be acquired by using the yaw rate. Similarly as above, the first area 303 indicating the short range and the second area 304 indicating the long range are set based on the prediction course. As the yaw rate used in the processing area setting unit 702, a yaw rate detected by using a sensor in the self-vehicle may be used.

In the second embodiment described as above, by setting the processing area based on a lane detection result, only searching of an area required for traveling is performed to reduce a calculation amount. By setting the processing area by using the yaw rate, in particular, the vicinity of a key prediction course of the self-vehicle may be primarily searched, and as a result, the calculation amount may be reduced.

[Third Embodiment]

Hereinafter, as a third embodiment, an embodiment applied to the vehicle system will be described. The same reference numerals designate the same components among components of the device for recognizing external worlds according to the embodiment as the components of the device for recognizing external worlds according to the first embodiment and a description thereof will be omitted.

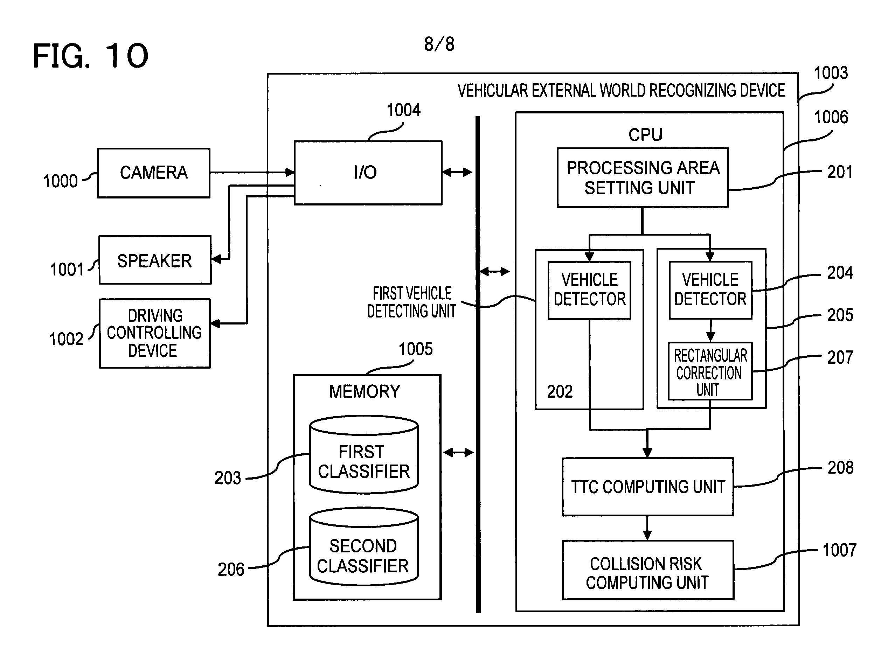

FIG. 10 illustrates the vehicle system according to the third embodiment. The vehicle system of the embodiment includes a camera 1000 capturing a front of the vehicle, a speaker 1001 installed inside the vehicle, a driving controlling device 1002 controlling driving of the vehicle and an external world recognizing device 1003 for the vehicle that recognizes an external world of the vehicle. The camera 1000 is not limited to a monocular camera and may adopt a stereo camera. The external world recognizing device 1003 for the vehicle includes an input/output interface I/O 1004 that inputs and outputs data, a memory 1005 and a CPU 1006 which is a processing unit executing various computations. The CPU 1006 has a function of recognizing external worlds and includes the processing area setting unit 201, the first vehicle detecting unit 202, the second vehicle detecting unit 205, the vehicle detector 204, the rectangular correction unit 207, the time to collision (TTC) computing unit 208 which are described in the above-mentioned embodiments and a risk computing unit 1007. The memory 1005 as a storage unit stores the first classifier 203 and the second classifier 204 for detecting the vehicle.

A flow of recognizing external worlds in the CPU 1006 will be described. First, the processing area setting unit 201 sets the first area and the second area in the image inputted from the camera 1000. The vehicle detector 204 detects the vehicle by using the first classifier 203 stored in the memory 1005 with respect to the image of the first area. The vehicle detector 204 detects the vehicle by using the second classifier 205 stored in the memory 1005 with respect to the image of the second area. The rectangular correction unit 207 performs rectangular correction by using the background/vehicle rate which has been already known. The time to collision (TTC) computing unit 208 computes the time to collision (TTC).

Lastly, the collision risk computing unit 1007 computes a risk by using the time to collision (TTC) computed by the time to collision (TTC) computing unit 208 based on a predetermined reference. When the collision risk computing unit 1007 computes that there is the risk, the speaker 1001 outputs a warning by using warning sound or voice. When it is computed that the risk further increases, the driving controlling device 1002 avoids a collision by putting on the brake.

In the third embodiment described as above, a collision warning system that raises a warning at the time when it is computed that there is the risk may be implemented by computing the time to collision (TTC) by means of the external world recognizing device, thereby supporting a driver's driving. A pre-crash safety system that puts on the brake at the time when it is computed that the risk is very high may be implemented by computing the time to collision (TTC) by means of the external world recognizing device, thereby supporting a driver's driving and reducing a damage in the collision.

The present invention is not limited to each embodiment described above and various changes can be made without departing from the spirit of the present invention. For example, the embodiments are described in detail in order to describe the present invention for easy understanding and are not limited to including all components of the description. Further, some of components of a predetermined embodiment can be substituted by components of another embodiment and the components of another embodiment can be added to the components of the predetermined embodiment. Other components can be added, deleted and substituted with respect to some of the components of each embodiment.

Some or all of the components, functions, processing units, processing modules and the like are designed by, for example, integrated circuits and thus may be implemented by hardware. The case in which some or all thereof are implemented by software that implements each component, each function and the like has been primarily described, but information including programs, data, files and the like that implement each function may be stored in recording devices including a hard disk, a solid state driver (SSD) and the like or recording media including an IC card, an SD card, a DVD and the like in addition to the memory, and when needed, the information may be downloaded and installed through a wireless network.

**Claims**

1.  A method for recognizing external worlds by an external world recognizing device that analyzes a captured image and detects an object, wherein the external world recognizing device sets a first area and a second area for detecting the object in the image, and detects the object by using both an object pattern and a background pattern of the corresponding object pattern at the time of detecting the object in the set second area.

2.  The method for recognizing external worlds according to claim 1, wherein:

    the first area is an area of a shorter range than the second area, and
    the external world recognizing device detects the object by using only the object pattern at the time of detecting the object in the first area.

3.  The method for recognizing external worlds according to claim 1, wherein the external world recognizing device corrects an object rectangular shape including the background pattern detected in the second area as an object rectangular shape without the corresponding background pattern.

4.  The method for recognizing external worlds according to claim 3, wherein the external world recognizing device computes a prediction time up to a collision with an object corresponding to the corresponding object rectangular shape by using the object rectangular shape detected in the first area or the object rectangular shape after the correction.

5.  The method for recognizing external worlds according to claim 4, wherein:

    the object is a vehicle, and
    the external world recognizing device generates a vehicle width of the vehicle from the object rectangular shape detected in the first area or the object rectangular shape after the correction, and computes the prediction time based on the vehicle width.

6.  A device for recognizing external worlds that analyzes a captured image and detects an object, comprising:

    a processing area setting unit setting a first area and a second area for detecting the object in the image; and
    first and second object detecting units detecting the objects in the set first area and second area, respectively, wherein the first object detecting unit uses only an object pattern at the time of detecting the object and the second object detecting unit uses both the object pattern and a background pattern of the corresponding object pattern at the time of detecting the object.

7.  The device for recognizing external worlds according to claim 6, wherein:

    the object is a vehicle, and
    the first area is an area of a shorter range than the second area.

8.  The device for recognizing external worlds according to claim 7, wherein:

    the first object detecting unit and the second object detecting unit include a first classifier and a second classifier, respectively, and
    the first classifier is constituted by a plurality of weak classifiers for determining a back-surface pattern of the vehicle and the second classifier is constituted by a plurality of weak classifiers for determining the back-surface pattern of the vehicle and the background pattern.

9. The device for recognizing external worlds according to claim 8, wherein the second object detecting unit includes a rectangular correction unit correcting an object rectangular shape including the background pattern detected in the second area as an object rectangular shape without the corresponding background pattern.

10. The device for recognizing external worlds according to claim 9, further comprising:

a time to collision (TTC) computing unit computing a prediction time up to a collision with an object corresponding to the corresponding object rectangular shape by using the object rectangular shape detected by the first object detecting unit or the object rectangular shape after the correction corrected by the rectangular correction unit.

11. The device for recognizing external worlds according to claim 10, wherein the time to collision (TTC) computing unit generates a vehicle width of the vehicle by using the object rectangular shape detected by the first object detecting unit or the object rectangular shape after the correction corrected by the rectangular correction unit, and computes the prediction time based on the vehicle width.

12. A vehicle system including an external world recognizing device that detects a vehicle by analyzing an image acquired by capturing the vicinity of a self-vehicle, wherein:

the external world recognizing device includes a processing unit and a storage unit,
the storage unit stores a first classifier and a second classifier, and
the processing unit
sets a first area for detecting a vehicle and a second area of a longer range than the first area, in the image,
detects a vehicle rectangular shape of the vehicle by determining a vehicle pattern by means of the first classifier, in the first area,
detects the vehicle rectangular shape of the vehicle by determining the vehicle pattern and a background pattern of the corresponding vehicle pattern by means of the second classifier, in the second area,
corrects the vehicle rectangular shape detected in the second area, and
computes a time to collision (TTC) up to a collision with the self-vehicle based on the vehicle rectangular shape detected by using the first classifier or the vehicle rectangular shape detected and corrected by using the second classifier.

13. The vehicle system according to claim 12, wherein the processing unit sets the first area and the second area based on detection of a lane in the image.

14. The vehicle system according to claim 12, wherein the processing unit sets the first area and the second area based on a yaw rate.

15. The vehicle system according to claim 12, wherein the processing unit computes a collision risk in which the self-vehicle collides with the vehicle in accordance with the collision prediction time, and performs a control for avoiding the collision of the self-vehicle in accordance with the computed collision risk.

# FIG. 1A

LONG RANGE 13 12 9

14

SHORT RANGE 15 11 8

10

# FIG. 1B

FIRST OBJECT DETECTING UNIT 102

IMAGE → PROCESSING AREA SETTING UNIT 101

FIRST CLASSIFIER 103 → OBJECT DETECTOR 104

SECOND CLASSIFIER 106 → OBJECT DETECTOR 104 → RECTANGULAR CORRECTION UNIT 107

SECOND OBJECT DETECTING UNIT 105

TIME-TO-COLLISION (TTC) COMPUTING UNIT 108 → OUTPUT SIGNAL

EXTERNAL WORLD RECOGNIZING DEVICE 100

# FIG. 2

FIRST VEHICLE DETECTING UNIT **202**

IMAGE → PROCESSING AREA SETTING UNIT **201**

FIRST CLASSIFIER **203** → VEHICLE DETECTOR **204**

SECOND CLASSIFIER **206** → VEHICLE DETECTOR **204** → RECTANGULAR CORRECTION UNIT **207**

SECOND VEHICLE DETECTING UNIT **205**

TIME-TO-COLLISION (TTC) COMPUTING UNIT **208** → OUTPUT SIGNAL

EXTERNAL WORLD RECOGNIZING DEVICE **200**

# FIG. 3

30

W2

304

303

302

301

H2

B2

X2

H1

X1

B1

W1

# FIG. 4A

# FIG. 4B

$$H_1(\mathbf{x}) = \mathrm{sign}\left(\sum_{t=1}^{T} \alpha_t h_t(x)\right)$$

## FIG. 5A

## FIG. 5B

$$H_2(\mathbf{x}) = \text{sign}\left(\sum_{t=1}^{T} \alpha_t h_t(x)\right)$$

VEHICLE OR NOT

## FIG. 5C

# FIG. 6

START

SET PROCESSING AREA — S6001

S6002

YES ——— FIRST AREA? ——— NO

S6004

DETECT VEHICLE USING
FIRST CLASSIFIER

DETECT VEHICLE USING
SECOND CLASSIFIER

S6003

PERFORM RECTANGULAR
CORRECTION

S6005

COMPUTE TTC — S6006

OUTPUT TTC — S6007

END

# FIG. 7

# FIG. 8A

# FIG. 8B

# FIG. 9

# FIG. 10

VEHICULAR EXTERNAL WORLD RECOGNIZING DEVICE — 1003

1004

CPU

1006

PROCESSING AREA SETTING UNIT — 201

1000 — CAMERA

I/O

1001 — SPEAKER

1002 — DRIVING CONTROLLING DEVICE

FIRST VEHICLE DETECTING UNIT

VEHICLE DETECTOR

VEHICLE DETECTOR — 204

RECTANGULAR CORRECTION UNIT — 205, 207

202

1005

MEMORY

203 — FIRST CLASSIFIER

206 — SECOND CLASSIFIER

TTC COMPUTING UNIT — 208

COLLISION RISK COMPUTING UNIT — 1007

EP 2 570 963 A2

17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005156199 A
- JP 2007072665 A
- JP H101998143799 B